Europäisches Patentamt

European Patent Office

Office européen des brevets

(11) Publication number: **0 101 229**
**B1**

(12) **EUROPEAN PATENT SPECIFICATION**

(45) Date of publication of patent specification: **26.07.89**

(21) Application number: **83304400.1**

(22) Date of filing: **29.07.83**

(51) Int. Cl.⁴: **C 08 J 7/04, C 09 D 3/82**

(54) **Coating lacquers for plastics articles.**

(30) Priority: **10.08.82 GB 8223039**

(43) Date of publication of application:
**22.02.84 Bulletin 84/08**

(45) Publication of the grant of the patent:
**26.07.89 Bulletin 89/30**

(84) Designated Contracting States:
**DE FR GB SE**

(56) References cited:
**US-A-4 006 271**
**US-A-4 154 617**
**US-A-4 186 026**

(73) Proprietor: **Combined Optical Industries Limited**
**200 Bath Road**
**Slough Berkshire SL1 4DW (GB)**

(72) Inventor: **Pasco, Ian Kenneth**
**The Nook Cocks Lane**
**Warfield Near Bracknell Berkshire (GB)**
Inventor: **Waters, David Neil**
**Lamorna Garden Reach Burtons Lane**
**Chalfont St. Giles Buckinghamshire (GB)**

(74) Representative: **Wain, Christopher Paul et al**
**A.A. THORNTON & CO. Northumberland House**
**303-306 High Holborn**
**London WC1V 7LE (GB)**

Courier Press, Leamington Spa, England.

# EP 0 101 229 B1

**Description**

This invention relates to coating lacquers for plastics articles, particularly but not exclusively for plastics optical elements such as visors, windshields and lenses.

It is well known to make optical elements of translucent plastics materials such as polycarbonates and acrylic resins. Such elements have many advantages over glass products, and indeed certain optical elements of very complex shape can only be made of plastics material. A serious disadvantage of plastics elements over glass elements, however, is that the plastics surfaces are not as hard as glass and, consequently, more readily suffer damage by abrasion and the like. Also, they are not as chemically resistant as glass and hence can suffer damage from contact with certain chemicals.

Attempts have been made to overcome these disadvantages by providing on the plastics surfaces an abrasion and/or chemically resistant coating. Many coating compositions have been proposed and some of the more successful are made by hydrolysing silicon-containing compounds to provide a cross-linked silica-like network in the coatings. For example, U.S. patent specification No. 4006271 describes coating compositions for polycarbonate substrates such as lenses. These compositions are made by hydrolysing a $C_1$ or $C_2$ alkyltri(lower alkoxy)silane in solution in a water-miscible, volatile, organic solvent, the solution also containing an abrasion-resistance enhancer, a stabilising weak acid and propyltriethoxysilane as an anticracking agent. In this process, the silane is partially hydrolysed, in the solution, by adding a dilute aqueous acid to catalyse the hydrolysis. The degree of hydrolysis is chosen to provide the desired coating rheology and ultimate hardness. An abrasion-resistance enhancer is then added, e.g. an amino $(C_1—C_8$ alkyl)tri-$(C_1—C_3$ alkoxy)silane, and a weak acid to give the coating solution the desired rheological stability. The solution is then ready for coating on a polycarbonate substrate.

One of the most important factors, in practice, in formulating a coating lacquer is to achieve exactly the right viscosity. The various different coating methods (e.g. dipping, spraying and spinning) all require different viscosities and, in addition, in each method, the thickness of the coating produced is to some extent dependent on the viscosity of the coating solution. It will be understood, therefore, that very careful control of viscosity is required, when making a coating solution, having regard to the intended use. In the U.S. specification referred to above, it can be difficult to achieve the exact optimum viscosity for any particular formulation.

We have now devised an improved way of making coating compositions for plastics articles, whereby the viscosity of the composition can be very closely controlled during its formulation.

According to the invention, there is provided a method of making a lacquer for coating plastics articles to provide thereon an abrasion and/or chemically resistant surface, which comprises:

a) forming a mixture comprising:

i) one or more silicon-containing compounds selected from tetra $(C_1—C_3)$alkylorthosilicates, $(C_1—C_3)$alkyltri $(C_1—C_3)$alkoxysilanes and aryltri$(C_1—C_3)$alkoxysilanes;

ii) a strong acid condensing agent for (i); and

iii) a solvent comprising one or more alkanols;

b) allowing the mixture to age;

c) adding to the aged mixture:

i) a weak organic acid; and

ii) an abrasion resistance enhancer if the same was not added in step (a);

d) allowing the mixture from step (c) to age until its viscosity reaches the desired value; and

e) immediately adding to the aged mixture from step (d) a further quantity of a weak organic acid to stabilise the viscosity at the desired level;

the amounts of the components used, by weight percent, being:

| | |
|---|---|
| silane | 25—40% |
| strong acid solution (0.1 to 0.01M) | 15—25% |
| solvent | 20—30% |
| weak acid (step (c)) | 1—4% |
| abrasion resistance enhancer (if present) | 5—15% |
| weak acid (step (e)) | 1—4% |

Optionally, up to 12% of one or more complex ether wetting agents are also included in the reaction mixture.

In the method of the invention, a weak organic acid is added both in step (c) and in step (e). This is in contrast to the process of the U.S. specification, where all the weak organic acid is added in step (c). The advantage thereby achieved in the method of the present invention is that, following step (c), the rate of change in viscosity is slow but finite and thus, as and when the optimum is reached, the final addition of acid (step (e)) can be effected. This change in the process allows very precise control of viscosity which is critically important to achieve optimum results in use of the compositions.

In step (a) of the method of the invention, there is made a mixture comprising three types of reagent, namely the silicon-containing compound to be hydrolysed, the strong acid condensing agent therefor, and a solvent. The preferred silicon-containing compounds are methyltrimethoxysilane and methyltriethoxy-

2

silane, but other silanes and orthosilicates as defined can be used. Normally, only one silicon-containing compound is used, but two or more may be used if desired.

The acid condensing agent is an aqueous solution of a strong acid such as hydrochloric or sulphuric acid, or perchloric acid, for example.

The preferred solvents are $C_3$ and upwards alkanols, and they may be used singly or in admixture. Ethanol alone is not preferred because the lacquers so made are difficult to use and require very close humidity control. Also the coatings tend to be inferior. The best solvent of which we are aware is a mixture of isopropanol and butanol. It will be understood that whatever solvent is used, it must provide an inert carrier liquid which will not attack the plastics article to be coated.

In order to improve the flexibility of the coating, one or more further silicon-containing or other compounds may be included which are suitable for this purpose, in an amount of 5 to 10% by weight percent, preferred compounds being propyl triethoxysilane, γ - methacryloxy - propyltrimethoxysilane, γ - methacryloxy - propyltris - (2 - methoxyethoxy)silane and the acrylic and methacrylic acid adducts of γ - aminopropyltriethoxysilane.

Optionally, there may also be included in the mixture of step (a) an abrasion resistance enhancer which is an aminoalkylalkoxysilane (or, where an acrylic plastics surface is to be coated, an acrylic or methacrylic adduct thereof), such as an amino $(C_1—C_3)$alkyl $(C_1—C_3)$alkoxysilane. The preferred such reagents are γ - aminopropyl triethoxysilane (GATS) and N - β - aminoethyl - γ - aminopropyl trimethoxysilane. If the abrasion resistance enhancer is not included in step (a), then it is added in step (c).

In step (b) of the method of the invention, the mixture formed in step (a) is allowed to age. Ageing at this stage means allowing time for hydrolysis of the alkoxy groups in the silanes and subsequent condensation of the resulting silanol groups. Since this is an exothermic reaction, it is considered that ageing is complete when heat evolution ceases. The time required for this reaction will be dependent on the ageing temperature and nature of the mixture. In general, we have found that periods of from about 5 to 20 hours, at about −4° to +4°C., are satisfactory, but longer or shorter periods can be used (particularly at lower or higher temperatures, respectively).

In step (c) of the method, further reagents are added to the coating. One of these is an abrasion resistance enhancer unless such has already been added in step (a).

Another reagent which we prefer to add in step (c) is a complex ether wetting agent, such as, for example, mono- or di-ethylene glycol mono $(C_1—C_4)$ alkyl ether. The preferred ether is Digol M (diethyleneglycol monomethyl ether). ("Digol" is a trade mark). If desired, however, this component may be added at an earlier or later stage of the preparation.

A weak organic acid is added in step (c). The acid used must interact appropriately with the abrasion-resistance enhancer to slow down the cross-linking reaction and so reduce the rate of increase of the viscosity. Generally, acetic, formic, citric and oxalic acids will be useful. When GATS is used as the abrasion resistance enhancer, we prefer to employ acetic acid as the weak acid.

In step (d) of the process, the solution from step (c) is aged during which time its viscosity will slowly increase. Regular monitoring of the viscosity allows the right moment to be chosen for step (e), when more weak organic acid (as in step (c)) is added to reduce further the rate of increase of viscosity and so stabilise the solution ready for the coating process. The period of ageing in step (d) will depend on the temperature (preferably from −4 to +4°C.), the constitution of the solution, and of course on the viscosity required. In practice, the ageing period can vary from a few minutes to several hours or more, depending on all the parameters.

Other components may be included in the compositions provided that they do not deleteriously interfere. For example, soluble dyes can be included.

Among the plastics surfaces which can be coated in accordance with the invention are thermoformed polycarbonate sheet, injection moulded polycarbonate; thermoformed acrylic, compression moulded acrylic, injection moulded acrylic. In addition, we have found that the coatings adhere well to both brass and gold plated plastic surfaces.

Among the products which can be coated are protective visors, e.g. for military, public service, or motorcycle use; safety goggles lenses, spectacles, automotive headlamp lenses and automotive windows.

The quantities of each of the components of the compositions of the invention can vary widely within the indicated limits. The following Table sets out the general and preferred ranges:

TABLE

| Steps (a)—(c) | % by weight of solution | |
| --- | --- | --- |
| | General | Preferred |
| silane | 25—40 | 30—40 |
| strong acid solution | 15—25 | 20—25 |
| solvent | 20—30 | 20—25 |
| flexibility enhancer (if present) | 5—10 | 5—7 |
| weak acid | 1—4 | 1—2 |
| wetting agent | 0—12 | 4—6 |
| abrasion enhancer | 5—15 | 7—10 |
| Step (e) further weak acid | 1—4 | 2—3 |

In step (a), the strong acid is preferably used at about 0.05M (although anywhere in the range 0.1M to 0.01M is usually satisfactory).

In order that the invention may be further understood, the following Examples are given by way of illustration only.

Example 1

A lacquer of the following composition was made:

| | % by wt |
| --- | --- |
| HCl (0.05M) | 22.7 |
| 2:1 mixture isopropanol/butanol | 22.7 |
| methyltriethoxysilane | 34.5 |
| γ-methacryloxypropyl triethoxysilane | 1.8 |
| Digol M | 4.5 |
| GATS | 9.1 |
| Glacial acetic acid | 1.7 |
| Final addition glacial acetic acid | 2.9 |

The HCl, solvent mixture and methyltriethoxysilane were pre-cooled and then mixed together and aged for 16 hours at −4°C.

Then the acetic acid, Digol M and GATS were added, the GATS being added slowly with stirring. The viscosity of the solution immediately after adding these reagents was 50 seconds (as measured with a standard viscosity cup). The mixture was then aged for 50 minutes at −4°C., during which time its viscosity rose to 3 minutes 30 seconds. The final addition of glacial acetic acid was then made.

This lacquer is particularly suitable where the highest possible cosmetic standards are required. The abrasion resistance is not as high as in Examples 2 and 3.

Example 2

The procedure of Example 1 was repeated except that the second ageing was effected for 2 hours (instead of 50 minutes). The viscosity rose to 6 minutes. This lacquer is useful as a general visor dipping lacquer.

Example 3

The procedure of Example 1 was repeated except that the second ageing step was effected for 18 hours (instead of 50 minutes). The final viscosity was 12 minutes. This lacquer is useful for spinning a circular lens to the highest abrasion resistance commensurate with cosmetic requirements, to meet British Standard 2092.

Example 4

The lacquers of Examples 1 to 3 do not adhere to acrylic material. To make a lacquer which adhered to acrylic material, there was added to the lacquer of Example 2 an adhesion promoter for acrylic material.

The adhesion promoter consisted of 55 to 65 wt% methyl methacrylate, 25 to 35 wt β - hydroxyethylmethacrylate and 8—12 wt γ - methacryloxypropyl triethoxy silane. The adhesion promoter was produced from its constituents by solution polymerisation, preferably in 2-ethoxy ethanol, using a free radical initiator such as azoisobutyric acid dinitrile. The preferred amounts of constituents for the adhesion promoter are:

| | |
|---|---|
| methyl methacrylate | 15.0% |
| β-hydroxyethyl methacrylate | 6.7% |
| γ-methacryloxy propyl triethoxy silane | 2.3% |
| 2-ethoxy ethanol | 75.6% |
| azoisobutyric acid dinitrile | 0.4% |

The adhesion promoter was added to the lacquer of Example 2 in an amount equalling 10% by weight. The abrasion resistance of the lacquer so formed was in excess of that recorded for the lacquer of Example 3.

Example 5

The procedure of Example 1 was repeated using methyltrimethoxysilane in place of methyltriethoxysilane, and using slightly different reagent quantities as follows:

| | % by wt |
|---|---|
| HCl (0.04M) | 26.4 |
| 2:1 mixture isopropanol/butanol | 26.4 |
| methyltrimethoxysilane | 34.5 |
| γ-methacryloxypropyl triethoxysilane | 2.3 |
| Digol M | 5.2 |
| GATS | 9.1 |
| Glacial acetic acid (first addition) | 1.3 |
| Glacial acetic acid (second addition) | 3.0 |

This lacquer gives a higher abrasion resistance on polycarbonate than the lacquers of Examples 1 to 3. It can be applied to acrylic materials if an adhesion promoter is included (as in Example 4).

**Claims**

1. A method of making a lacquer for coating plastics articles to provide thereon an abrasion and/or chemically resistant surface, which comprises:
a) forming a mixture comprising:
i) one or more silicon-containing compounds selected from tetra $(C_1—C_3)$alkylorthosilicates, $(C_1—C_3)$-alkyltri $(C_1—C_3)$alkoxysilanes and aryltri$(C_1—C_3)$alkoxysilanes;
ii) a strong acid condensing agent for (i); and
iii) a solvent comprising one or more alkanols;
b) allowing the mixture to age;
c) adding to the aged mixture:
i) a weak organic acid; and
ii) an abrasion resistance enhancer if the same was not added in step (a);
d) allowing the mixture from step (c) to age until its viscosity reaches the desired value; and
e) immediately adding to the aged mixture from step (d) a further quantity of a weak organic acid to stabilise the viscosity at the desired level;
and wherein one or more complex ether wetting agents are optionally also included in the reaction mixture; the amounts of the components used, by weight percent, being:

| | |
|---|---|
| silane | 24—40% |
| strong acid solution (0.1 to 0.01M) | 15—25% |
| solvent | 20—30% |
| weak acid (step (c)) | 1—4% |
| wetting agent | 0—12% |
| abrasion resistance enhancer (if present) | 5—15% |
| weak acid (step (e)) | 1—4% |

2. A method according to claim 1, wherein in step (a) the silicon-containing compound is selected from methyltrimethoxysilane and methyltriethoxysilane.

3. A method according to claim 1 or 2, wherein in step (a) the strong acid is selected from hydrochloric acid, sulphuric acid and perchloric acid.

4. A method according to claim 1, 2 or 3, wherein in step (a) the solvent comprises one or more $C_3$-upwards alkanols.

5. A method according to claim 4, wherein the solvent is a mixture of isopropanol and butanol.

6. A method according to any of claims 1 to 5, wherein in step (b) the mixture is aged at below room temperature until the evolution of heat ceases.

7. A method according to any of claims 1 to 6, wherein in steps (c) and (e), the weak organic acid is selected from acetic, formic, citric and oxalic acids.

8. A method according to any of claims 1 to 7, wherein the said one or more complex ether wetting agents are added in step (c), said agents being selected from mono- and di-ethyleneglycol mono $(C_1-C_4)$alkyl ethers.

9. A method according to any of claims 1 to 8, wherein in step (a) a coating flexibility enhancer is included in the mixture in an amount of 5 to 10% by weight percent said enhancer being selected from propyl triethoxysilane, γ - methacryloxy - propyltrimethoxysilane, γ - methacryloxy - propyltris(2 - methoxyethoxy)silane, and acrylic and methacrylic adducts of γ - aminopropyltriethoxysilane.

10. A method according to any of claims 1 to 9, wherein said abrasion resistance enhancer, which is included in the mixture in step (a) or step (c), is selected from amino $(C_1-C_3)$alkyl $(C_1-C_3)$ - alkoxysilanes.

11. A method according to claim 10, wherein the abrasion resistance enhancer is selected from γ - aminopropyl triethoxy silane and N - β - aminoethyl - γ - aminopropyl trimethoxy silane.

12. A method according to any preceding claim, wherein the amounts of the components used, by weight percent, are:

| | |
|---|---|
| silane | 30—40% |
| strong acid solution (0.05M) | 20—25% |
| solvent | 20—25% |
| weak acid (step (c)) | 1—2% |
| wetting agent | 4—6% |
| flexibility enhancer (if present) | 5—7% |
| abrasion resistance enhancer (if present) | 7—10% |
| weak acid (step (e)) | 2—3% |

13. A method of providing a protective coating on a plastics article, wherein at least part of the surface of the article is coated with a lacquer made by the method of any preceding claim.

14. A plastics surface having thereon a protective coating formed from a lacquer made by the method of any of claims 1 to 12.

**Patentansprüche**

1. Verfahren zur Herstellung eines Lacks zur Beschichtung von Kunststoffgegenständen, um darauf eine abrieb- und/oder chemisch-beständige Oberfläche vorzusehen, umfassend:
a) Bilden einer Mischung, umfassend:
i) eine oder mehrere Silicium enthaltende Verbindungen, gewählt aus Tetra$(C_1-C_3)$alkylorthosilikaten, $(C_1-C_3)$Alkyltri$(C_1-C_3)$alkoxysilanen und Aryltri$(C_1-C_3)$alkoxysilanen;
ii) ein starkes Säure-Kondensationsmittel für (i); und
iii) ein Lösungsmittel, umfassend einen oder mehrere Alkanole;
b) Alternlassen der Mischung;
c) Zugeben zu der gealterten Mischung:
i) einer schwachen organischen Säure; und
ii) eines die Abriebbeständigkeit erhöhenden Mittels, falls dieses nicht in Stufe a) zugegeben wurde;
d) Alternlassen der Mischung aus Stufe c) bis deren Viskosität den erwünschten Wert erreicht; und
e) unmittelbares Zugeben zu der gealterten Mischung aus Stufe d) einer weiteren Menge einer schwachen organischen Säure, um die Viskosität auf dem erwünschten Wert zu stabilisieren;
wobei ein oder mehrere Komplex-Ether-Netzmittel wahlweise ebenso in der Reaktionsmischung beinhaltet sind; wobei die Mengen der verwendeten Komponente, in Gewichtsprozent, wie folgt sind:

| | |
|---|---|
| Silan | 25—40% |
| starke Säure-Lösung (0,1 bis 0,01M) | 15—25% |
| Lösungsmittel | 20—30% |
| schwache Säure (Stufe (c)) | 1—4% |
| Netzmittel | 0—12% |
| Abriebbeständigkeit erhöhendes Mittel (falls vorhanden) | 5—15% |
| schwache Säure (Stufe (e)) | 1—4% |

2. Verfahren nach Anspruch 1, wobei in Stufe (a) die Silicium enthaltende Verbindung aus Methyltrimethoxysilan und Methyltriethoxysilan gewählt wird.

3. Verfahren nach Anspruch 1 oder 2, wobei in Stufe (a) die starke Säure aus Salzsäure, Schwefelsäure und Perchlorsäure gewählt wird.

4. Verfahren nach Anspruch 1, 2 oder 3, wobei in Stufe (a) das Lösungsmittel ein oder mehrere $C_3$-aufwärts-Alkanole umfaßt.

5. Verfahren nach Anspruch 4, wobei das Lösungsmittel eine Mischung aus Isopropanol und Butanol ist.

6. Verfahren nach einem der Ansprüche 1 bis 5, wobei in Stufe (b) die Mischung unterhalb Raumtemperatur alterngelassen wird, bis die Wärmeentwicklung aufhört.

7. Verfahren nach einem der Ansprüche 1 bis 6, wobei in Stufen (c) und (e) die schwache organische Säure aus Essig-, Ameisen-, Zitronen- und Oxalsäure gewählt wird.

8. Verfahren nach einem der Ansprüche 1 bis 7, wobei das eine oder die mehreren Komplex - Ether - Netzmittel in Stufe (c) zugegeben werden, wobei diese Mittel aus Mono- und Diethylenglykolmono($C_1$—$C_4$)-alkylethern gewählt werden.

9. Verfahren nach einem der Ansprüche 1 bis 8, wobei in Stufe (a) ein Beschichtungsflexibilitätsverstärkungsmittel in der Mischung in einer Menge von 5 bis 10 Gew.-% beinhaltet ist, wobei das Verstärkungsmittel aus Propyltriethoxysilan, $\gamma$ - Methacryloxy - propyltrimethoxysilan, $\gamma$ - Methacryloxy - propyltris(2 - methoxyethoxy)silan und Acrylsäure- und Methacrylsäureaddukten von $\gamma$ - Aminopropyltriethoxysilan gewählt wird.

10. Verfahren nach einem der Ansprüche 1 bis 9, wobei das die Abriebbeständigkeit erhöhende Mittel, das in der Mischung in Stufe (a) oder Stufe (c) beinhaltet ist, aus Amino($C_1$—$C_3$)alkyl($C_1$—$C_3$)alkoxysilanen gewählt wird.

11. Verfahren nach Anspruch 10, wobei das die Abriebbeständigkeit erhöhende Mittel aus $\gamma$ - Aminopropyltriethoxysilan und N - $\beta$ - Aminoethyl - $\gamma$ - aminopropyltrimethoxysilan gewählt wird.

12. Verfahren nach einem der vorangehenden Ansprüche, wobei die Mengen der verwendeten Komponenten, in Gew.-%, wie folgt sind:

| | |
|---|---|
| Silan | 30—40% |
| starke Säure-Lösung (0,05M) | 20—25% |
| Lösungsmittel | 20—25% |
| schwache Säure (Stufe (c)) | 1—2% |
| Netzmittel | 4—6% |
| Flexibilitätsverstärkungsmittel (falls vorhanden) | 5—7% |
| Abriebbeständigkeit erhöhendes Mittel (falls vorhanden) | 7—10% |
| schwache Säure (Stufe (e)) | 2—3% |

13. Verfahren zum Vorsehen einer Schutzbeschichtung auf einem Kunststoffgegenstand, wobei mindestens ein Teil der Oberfläche des Gegenstands mit einem Lack, hergestellt nach dem Verfahren nach einem der vorangehenden Ansprüche, beschichtet wird.

14. Kunststoffoberfläche mit einer darauf befindlichen Schutzbeschichtung, gebildet aus einem Lack, der nach dem Verfahren gemäß einem der Ansprüche 1 bis 12 hergestellt worden ist.

## Revendications

1. Un procédé de préparation d'une laque pour le revêtement des articles en platiques pour former sur ces derniers une surface résistant à l'abrasion et/ou aux produits chimiques, ledit procédé consistant:

a) à former un mélange comprenant:

i) un ou plusieurs composés contenant du silicium choisis parmi les orthosilicates de tétra($C_1$—$C_3$)-alkyle, les ($C_1$—$C_3$)alkyltri($C_1$—$C_3$)alcoxysilanes et les aryltri($C_1$—$C_3$)alcoxysilanes;

ii) un agent de condensation à base d'acide fort pour (i); et

iii) un solvant comprenant un ou plusieurs alcanols;

b) à laisser vieillir le mélange;

c) à ajouter au mélange vieilli:

i) un acide organique faible; et

ii) un agent améliorant la résistance à l'abrasion lorsque ce dernier n'a pas été ajouté dans l'étape (a);

d) à laisser vieillir le mélange de l'étape (c) jusqu'à ce que sa viscosité atteigne la valeur désirée; et

e) à ajouter immédiatement au mélange vieilli provenant de l'étape (d) une autre quantité d'un acide organique faible pour stabiliser la viscosité au niveau désiré;

et à inclure éventuellement dans le mélange réactionnel un ou plusieurs agents mouillants à base d'éther complexe; les quantités des composants utilisés, en pour-cent en poids étant les suivants:

| | |
|---|---|
| silane | 25—40% |
| solution d'acide fort (0,1 à 0,01M) | 15—25% |
| solvant | 20—30% |
| acide faible (étape (c)) | 1—4% |
| agent mouillant | 0—12% |
| agent améliorant la résistance à l'abrasion (si présent) | 5—15% |
| acide faible (étape (e)) | 1—4% |

2. Un procédé selon la revendication 1, selon lequel dans l'étape (a) le composé contenant du silicium est choisi parmi le méthyltriméthoxysilane et le méthyltriéthoxysilane.

3. Un procédé selon la revendication 1 ou 2, selon lequel dans l'étape (a) l'acide fort est choisi parmi l'acide chlorhydrique, l'acide sulfurique et l'acide perchlorique.

4. Un procédé selon la revendication 1, 2 ou 3, selon lequel dans l'étape (a) le solvant comprend un ou plusieurs alcanols en $C_3$ et plus.

5. Un procédé selon la revendication 4, selon lequel le solvant est un mélange d'isopropanol et de butanol.

6. Un procédé selon l'une quelconque des revendications 1 à 5, selon lequel l'étape (b) le mélange est vieilli à une température inférieure à la température ambiante jusqu'à ce que le dégagement de la chaleur ait cessé.

7. Un procédé selon l'une quelconque des revendications 1 à 6, selon lequel dans les étapes (c) et (e) l'acide organique faible est choisi parmi les acides acétique, formique, citrique et oxalique.

8. Un procédé selon l'une quelconque des revendications 1 à 7, selon lequel un ou plusieurs agents mouillants à base d'éther complexe sont ajoutés dans l'étape (c), lesdits agents étant choisis parmi les éthers mono ($C_1$—$C_4$) alkyliques du mono- et du diéthylèneglycol.

9. Un procédé selon l'une quelconque des revendications 1 à 8, selon lequel dans l'étape (a) un agent améliorant la flexibilité du revêtement est inclus dans le mélange en quantité de 5 à 10% en poids, ledit agent étant sélectionné parmi le propyl triéthoxysilane, le γ - méthacryloxy - propyltriméthoxysilane, le γ - méthacryloxy - propyltris(2 - méthoxyéthoxy)silane, et les adducts acryliques et méthacryliques du γ - aminopropyltriéthoxysilane.

10. Un procédé selon l'une quelconque des revendications 1 à 9, selon lequel ledit agent améliorant la résistance à l'abrasion qui est inclus dans le mélange dans l'étape (a) ou dans l'étape (c) est sélectionné parmi les amino ($C_1$—$C_3$)alkyl ($C_1$—$C_3$)alcoxysilanes.

11. Un procédé selon la revendication 10, selon lequel l'agent améliorant la résistance à l'abrasion est choisi parmi le γ - aminopropyltriéthoxysilane et le N - β - aminoéthyl - γ - aminopropyltriméthoxy-silane.

12. Un procédé selon l'une quelconque des revendications précédentes, selon lequel les quantités des composants utilisés, en pour-cent en poids sont les suivantes:

| silane | 30—40% |
|---|---|
| solution d'acide fort (0,05M) | 20—25% |
| solvant | 20—25% |
| acide faible (étape (c)) | 1—2% |
| agent mouillant | 4—6% |
| agent améliorant la flexibilité (si présent) | 5—7% |
| agent améliorant la résistance à l'abrasion (si présent) | 7—10% |
| acide faible (étape (e)) | 2—3% |

13. Un procédé pour fournir un revêtement protecteur sur un article en plastique, selon lequel au moins une partie de la surface de l'article est revêtue d'une laque préparée par le procédé de l'une quelconque des revendications précédentes.

14. Une surface plastique portant un revêtement protecteur formée à partir d'une laque préparée par le procédé de l'une quelconque des revendications précédentes 1 à 12.